# EUROPEAN PATENT SPECIFICATION

(11) **EP 3 611 096 B1**
(45) Date of publication and mention of the grant of the patent: **13.12.2023**
(21) Application number: 18783834.7
(22) Date of filing: 10.04.2018
(51) Int. Cl.: B64D 25/00, B64C 13/20, B64C 31/036, B64C 39/02, B64D 17/72, B64D 17/80, B64D 47/08, B64D 17/54, B64D 17/02, B64D 45/06

(54) **FLIGHT VEHICLE AND METHOD FOR CONTROLLING FLIGHT VEHICLE**
LUFTFAHRZEUG UND VERFAHREN ZUR STEUERUNG EINES LUFTFAHRZEUGS
VÉHICULE DE VOL ET PROCÉDÉ DE COMMANDE D'UN VÉHICULE DE VOL

(30) Priority: 11.04.2017 JP 2017078037; 19.04.2017 JP 2017082935
(43) Date of publication of application: 19.02.2020
(73) Proprietor: Nippon Kayaku Kabushiki Kaisha, Tokyo 100-0005 (JP)
(72) Inventor: NAKAMURA, Hiroshi, Himeji-shi Hyogo 679-2123 (JP); YAGIHASHI, Yasuhiko, Himeji-shi Hyogo 679-2123 (JP); KUBO, Dairi, Himeji-shi Hyogo 679-2123 (JP)
(74) Representative: TBK
(86) International application number: PCT/JP2018/014997
(87) International publication number: WO 2018/190319

(56) References cited:
- WO-A1-2007/086055
- WO-A1-2014/080409
- WO-A1-2016/171120
- WO-A1-2017/022806
- WO-A1-2017/026337
- WO-A1-2017/030034
- WO-A1-2017/057157
- JP-A- S6 474 200
- JP-A- H09 207 890
- JP-A- S60 174 393
- JP-A- 2017 065 467
- JP-U- H03 118 196
- US-A1- 2016 318 615
- US-B1- 6 343 244

## Description

### TECHNICAL FIELD

The present disclosure relates to an aerial vehicle according to the preamble of claim 1 represented, for example, by a drone and a corresponding method of controlling the aerial vehicle.

### BACKGROUND ART

Various aerial vehicles have conventionally been known. The aerial vehicle includes not only a manned aerial vehicle such as a passenger aircraft or a helicopter but also an unmanned aerial vehicle. In particular, with recent development of an autonomous control technology and a flight control technology, industrial applications of an unmanned aerial vehicle such as a drone have increasingly been expanded.

A drone includes, for example, a plurality of rotors, and flies by rotating the plurality of rotors simultaneously in a balanced manner. At that time, ascent and descent are done by uniformly increasing or decreasing the number of rotations of the plurality of rotors, and movement forward and rearward is done by inclining an airframe by individually increasing or decreasing the number of rotations of each of the plurality of rotors. It is expected that such an unmanned aerial vehicle will more increasingly be used worldwide in the future.

A falling accident of an unmanned aerial vehicle, however, has been feared, which has interfered widespread use of the unmanned aerial vehicle. In order to lower the possibility of such a falling accident, a parachute apparatus for an unmanned aerial vehicle has been put into practical use. Such a parachute apparatus for an unmanned aerial vehicle lessens impact at the time of landing by lowering a speed of the unmanned aerial vehicle by using an expanded parachute in the event of falling of the unmanned aerial vehicle.

A guide apparatus making use of a gliding parachute which guides a falling object (payload) from a rocket to a target position of falling set in advance for recovery of the falling object has been known, although it is not directed to an unmanned aerial vehicle. The guide apparatus is disclosed, for example, in JP H05 185993 A (PTL 1).

Specifically, the guide apparatus is configured to determine a current direction of movement of the gliding parachute based on a three-dimensional position detected by a position detector and an orientation in a horizontal direction detected by an attitude detector and to drive an actuator in accordance with a difference between the direction of movement and a target position of falling set in advance.

More specifically, the guide apparatus has a function to turn, when the direction of movement of the gliding parachute does not match with a direction toward the target position of falling, the gliding parachute by manipulating a right or left control line by driving the actuator to match the direction of movement with the direction toward the target position of falling.
A generic aerial vehicle and a corresponding method of controlling an aerial vehicle are disclosed by PTL 6. Further conventional aerial vehicles and methods of controlling aerial vehicles are shown by PTL 2-5.

### CITATION LIST

### PATENT LITERATURE

PTL 1: JP H05 185993 A
PTL 2: WO 2014/080409 A1
PTL 3: WO 2007/086055 A1
PTL 4: US 6 343 244 B1
PTL 5: WO 2017/026337 A1
PTL 6: US 2016/318615 A1

### SUMMARY OF INVENTION

### TECHNICAL PROBLEM

The parachute apparatus for the unmanned aerial vehicle known from PTL 1 and described above, however, does not guide an unmanned aerial vehicle to a target position of falling. Therefore, the unmanned aerial vehicle is disadvantageously swept by a crosswind and enters, for example, a no-fly zone or is significantly displaced from the target position.

The guide apparatus described above is configured to guide a falling object from a rocket to a target position of falling for recovery of the falling object. Therefore, the guide apparatus is not configured to sense falling of an aerial vehicle including a propulsive mechanism such as an unmanned aerial vehicle and to guide the aerial vehicle to the target position of falling.

The present disclosure was made in view of such circumstances, and an object thereof is to provide an aerial vehicle of which airframe can be guided in the case of falling and a method of controlling the same.

### SOLUTION TO PROBLEM

The above object is achieved by an aerial vehicle having the features of claim 1 and by a method of controlling an aerial vehicle having the features of claim 15. Further advantageous developments of the present invention are set out in the dependent claims.

An aerial vehicle according to the present invention includes an airframe, a propulsive mechanism provided in the airframe, a lift generation member provided in the airframe in an expandable manner, a manipulation mechanism connected to the lift generation member and configured to manipulate the lift generation member with the lift generation member having been expanded, an expansion apparatus configured to expand the lift generation member, a control unit configured to control the manipulation mechanism, and a falling sensing unit configured to sense falling of the airframe and to provide a falling sensing signal to the expansion apparatus and the control unit. In the aerial vehicle according to the present invention the expansion apparatus is configured to expand the lift generation member upon receiving the falling sensing signal, and the control unit is configured to start control of the manipulation mechanism upon receiving the falling sensing signal.

The lift generation member may be in any form so long as it generates lift in the expanded state, and examples of the lift generation member include a parafoil, a Rogallo paraglider, a Rogallo parachute, a triangular paraglider, and a triangular parachute.

Preferably, the expansion apparatus expands the lift generation member with propelling power based on a gas pressure produced by burning of gunpowder.

Preferably, the expansion apparatus is attached to an outer surface of the airframe.

Preferably, the falling sensing unit includes at least one of an acceleration sensor, a gyro sensor, a barometric pressure sensor, a laser sensor, an ultrasonic sensor, and an abnormal vibration sensing apparatus configured to sense abnormal vibration of the propulsive mechanism.

Preferably, the aerial vehicle further includes an electric power supply unit configured to supply electric power for operating the propulsive mechanism and includes an electric power supply source configured to supply electric power to the expansion apparatus, the control unit, and the falling sensing unit, separately from the electric power supply unit.

Preferably, the falling sensing unit includes at least one of an acceleration sensor, a gyro sensor, a barometric pressure sensor, a laser sensor, an ultrasonic sensor, an abnormal vibration sensing apparatus configured to sense abnormal vibration of the propulsive mechanism, and a voltage abnormality sensing apparatus configured to sense voltage abnormality in the electric power supply unit.

The aerial vehicle preferably further includes a position detector configured to detect position information of the airframe, and in that case, preferably, the control unit controls the manipulation mechanism based on the position information detected by the position detector.

Preferably, the position detector includes at least one of a GNSS apparatus configured to obtain the position information by using an artificial satellite, an apparatus configured to obtain the position information by using a base station of a portable telephone, a camera configured to pick up an image of surroundings of the airframe, a geomagnetic sensor configured to detect an azimuth of the airframe, and an altitude detection apparatus configured to detect an altitude of the airframe.

Preferably, the altitude detection apparatus includes at least one of a barometric pressure sensor, a laser sensor, an ultrasonic sensor, an infrared sensor, millimeter-wave radar, and sub millimeter-wave radar.

The aerial vehicle according to the present invention includes a downward condition detector configured to detect a condition below the airframe.

Preferably, the downward condition detector includes at least one of a camera, an image sensor, an infrared sensor, a laser sensor, an ultrasonic sensor, millimeter-wave radar, and sub millimeter-wave radar.

According to the present invention, the control unit determines a target position of falling of the airframe based on information detected by the downward condition detector and controls the manipulation mechanism such that the airframe is steered for the target position of falling.

The aerial vehicle according to the present invention includes a determination unit configured to determine whether or not there is anybody at the target position of falling based on the information detected by the downward condition detector.

In the aerial vehicle according to the present invention, when the determination unit determines that there is somebody at the target position of falling, the control unit changes the target position of falling and controls the manipulation mechanism such that the airframe is steered for the changed target position of falling.

The aerial vehicle may preferably further include a notification unit configured to issue an alarm when the determination unit determines that there is somebody at the target position of falling.

In the aerial vehicle, the control unit may preferably control the manipulation mechanism such that the airframe is steered for a predetermined flight destination.

The aerial vehicle may preferably further include a remote controller configured to remotely control the propulsive mechanism, and in that case, preferably, the remote controller includes a display configured to show information detected by the downward condition detector.

Preferably, the airframe may be provided with a flight controller configured to control the propulsive mechanism, and in that case, preferably, the control unit is incorporated in the flight controller.

The aerial vehicle may preferably be an unmanned aerial vehicle.

A method of controlling an aerial vehicle according to the present invention includes, when the aerial vehicle includes an airframe, a propulsive mechanism provided in the airframe, a lift generation member provided in the airframe in an expandable manner, a manipulation mechanism connected to the lift generation member and configured to manipulate the lift generation member with the lift generation member having been expanded, an expansion apparatus configured to expand the lift generation member, a control unit configured to control the manipulation mechanism, and a falling sensing unit configured to sense falling of the airframe and to provide a falling sensing signal to the expansion apparatus and the control unit, the expansion apparatus expanding the lift generation member upon receiving the falling sensing signal and the control unit starting control of the manipulation mechanism upon receiving the falling sensing signal.

### ADVANTAGEOUS EFFECTS OF INVENTION

According to the present disclosure, an aerial vehicle of which airframe can be guided in the case of falling and a method of controlling the same can be realized.

### BRIEF DESCRIPTION OF DRAWINGS

Fig. 1 is a diagram showing a state in falling of an unmanned aerial vehicle according to a first embodiment.
Fig. 2 is a diagram showing a state of storage of a lift generation member in an expansion apparatus shown in Fig. 1.
Fig. 3 is a block diagram showing a configuration of a control system of the unmanned aerial vehicle shown in Fig. 1.
Fig. 4 is a diagram showing an expansion apparatus of an unmanned aerial vehicle according to a first modification.
Fig. 5 is a diagram showing a state in falling of an unmanned aerial vehicle according to a second embodiment.
Fig. 6 is a diagram showing a state of storage of a lift generation member in an expansion apparatus shown in Fig. 5.
Fig. 7 is a block diagram showing a configuration of a control system of the unmanned aerial vehicle shown in Fig. 5.
Fig. 8 is a diagram showing an expansion apparatus of an unmanned aerial vehicle according to a second modification.
Fig. 9 is a diagram showing a state in falling of an unmanned aerial vehicle according to a third modification.

### DESCRIPTION OF EMBODIMENTS

Embodiments of the present invention will be described in detail below with reference to the drawings. The embodiments below show by way of example application of the present invention to a drone representing an unmanned aerial vehicle as an aerial vehicle. The same or common elements in the embodiments shown below have the same reference characters allotted in the drawings and description thereof will not be repeated.

### <First Embodiment>

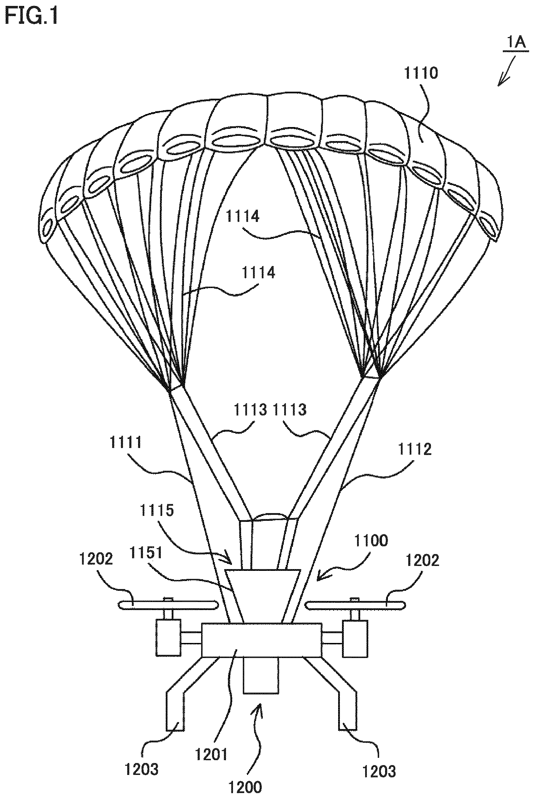

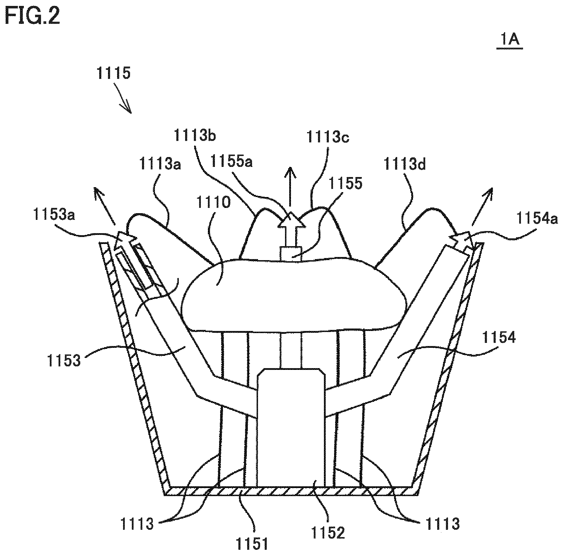

As shown in Fig. 1, an unmanned aerial vehicle 1A according to the present embodiment includes an aerial vehicle main body 1200 and a paraglider apparatus 1100 assembled to aerial vehicle main body 1200. A lift generation member 1110 (for example, a parafoil) included in paraglider apparatus 1100 is stored in a storage container 1151 of paraglider apparatus 1100 as shown in Fig. 2 while unmanned aerial vehicle 1A normally flies, and it is ejected to the outside of storage container 1151 of paraglider apparatus 1100 and expanded as shown in Fig. 1 in the case of falling of unmanned aerial vehicle 1A.

Paraglider apparatus 1100 includes lift generation member 1110 described above, control lines 1111 and 1112 connected to lift generation member 1110 and configured to manipulate an operation and a direction of lift generation member 1110, and an expansion apparatus 1115 configured to expand lift generation member 1110. In Fig. 1, control line 1111 is located on the left and control line 1112 is located on the right.

Aerial vehicle main body 1200 includes an airframe 1201, at least one propulsive mechanism 1202 (for example, a propeller) assembled to airframe 1201 and configured to propel airframe 1201, and a plurality of legs 1203 provided under airframe 1201.

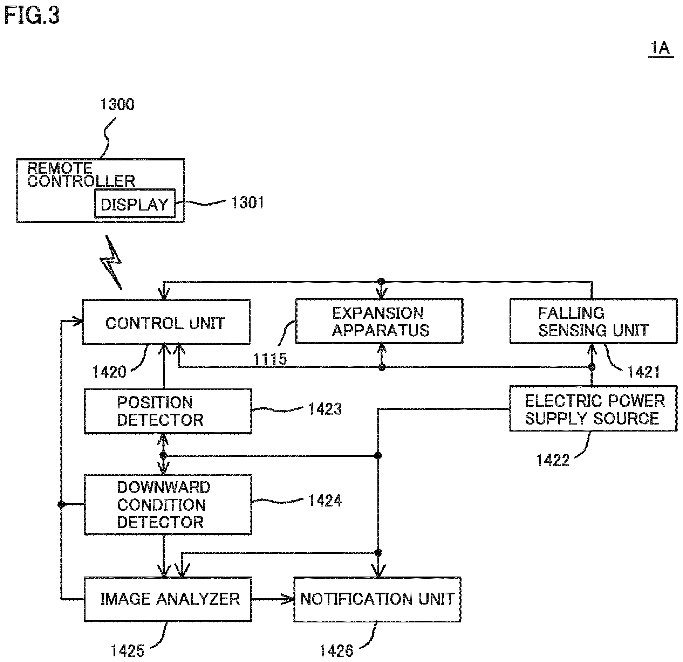

As shown in Fig. 3, unmanned aerial vehicle 1A includes, in addition to aerial vehicle main body 1200 and paraglider apparatus 1100 described above, a control unit (a computer including a central processing unit (CPU), a read only memory (ROM), or a random access memory (RAM)) 1420 configured to control control lines 1111 and 1112, a falling sensing unit 1421, an electric power supply source 1422, a position detector 1423, a downward condition detector 1424, an image analyzer 1425 as a determination unit, a notification unit 1426, and a remote controller 1300. Among these, control unit 1420, falling sensing unit 1421, electric power supply source 1422, position detector 1423, downward condition detector 1424, image analyzer 1425, and notification unit 1426 are provided in paraglider apparatus 1100 in the present embodiment.

Lift generation member 1110 is configured to be expandable by expansion apparatus 1115. As described above, in an initial state, lift generation member 1110 is arranged in an unexpanded state as shown in Fig. 2, and set to a state as shown in Fig. 1 by being expanded by expansion apparatus 1115.

As shown in Fig. 1, expansion apparatus 1115 is provided on airframe 1201 of aerial vehicle main body 1200. Expansion apparatus 1115 includes a cup-shaped storage container 1151 which stores yet-to-be-expanded lift generation member 1110, a plurality of first suspension lines 1113 having one ends fixed to a bottom of storage container 1151, and a plurality of second suspension lines 1114 having one ends connected to first suspension lines 1113 and the other ends connected to lift generation member 1110. Each of control lines 1111 and 1112 has one end connected to at least one of second suspension lines 1114 and has the other end connected to a drive motor (not shown) provided in airframe 1201 of aerial vehicle main body 1200. Control lines 1111 and 1112 and the drive motor described above correspond to the manipulation mechanism.

As shown in Fig. 2, expansion apparatus 1115 further includes a cylinder portion 1152 provided on the inner bottom of storage container 1151 and containing a pyroactuator (not shown) and three pipe portions 1153, 1154, and 1155 coupled to cylinder portion 1152. Pipe portions 1153, 1154, and 1155 are arranged, for example, like umbrella ribs. Since the pyroactuator has been known, detailed description thereof will not be provided, however, it is configured to generate a gas pressure as a result of burning of an ignition agent by an igniter. In one modification, instead of providing a pyroactuator in cylinder portion 1152, one pyroactuator may be provided in the inside of each of pipe portions 1153, 1154, and 1155 so as to be able to individually emit projectiles 1153a, 1154a, and 1155a which will be described later.

Projectile 1153a is inserted in pipe portion 1153 as being partially exposed. Projectile 1154a is similarly inserted in pipe portion 1154 as being partially exposed. Projectile 1155a is further similarly inserted in pipe portion 1155 as being partially exposed. Lift generation member 1110 is coupled to projectile 1153a by a string 1113a and coupled to projectile 1155a by a string 1113b. Lift generation member 1110 is coupled to projectile 1155a by a string 1113c and coupled to projectile 1154a by a string 1113d.

In such a configuration, projectiles 1153a, 1154a, and 1155a are ejected by a gas pressure produced in cylinder portion 1152 by the pyroactuator described above, so that strings 1113a, 1113b, 1113c, and 1113d are pulled in a direction of ejection and lift generation member 1110 is thus expanded. At that time, lift generation member 1110 is kept connected by being restricted by first suspension line 1113 owing to one ends of first suspension lines 1113 fixed to the bottom of storage container 1151. Then, winding up or feeding of control lines 1111 and 1112 by the drive motor described above is controlled by control unit 1420, so that an operation and a direction of expanded lift generation member 1110 are adjusted. Aerial vehicle main body 1200 is thus turned such that a direction of travel of aerial vehicle main body 1200 matches with a direction toward a target position of falling.

Referring to Fig. 3, falling sensing unit 1421 is implemented, for example, by at least one of an acceleration sensor, a gyro sensor, a barometric pressure sensor, a laser sensor, an ultrasonic sensor, an abnormal vibration sensing unit configured to sense abnormal vibration of propulsive mechanism 1202 (a motor which rotates a propeller) provided in airframe 1201, and a voltage abnormality sensing unit configured to sense voltage abnormality in an electric power supply unit (not shown) configured to supply electric power for operating propulsive mechanism 1202 provided in airframe 1201. In an example where falling sensing unit 1421 includes the acceleration sensor, when a situation enters a state set in advance, for example, when the acceleration sensor detects an acceleration equal to or higher than a prescribed level (for example, an acceleration set in advance beyond which assumption of falling is made), falling sensing unit 1421 provides a falling sensing signal indicating falling of airframe 1201 to expansion apparatus 1115 and control unit 1420. Expansion apparatus 1115 expands lift generation member 1110 upon receiving the falling sensing signal, and control unit 1420 starts control of an operation and a direction of lift generation member 1110 by using control lines 1111 and 1112 upon receiving the falling sensing signal. Alternatively, for example, when a control signal from remote controller 1300 has not been received for a certain time period, falling sensing unit 1421 may provide a falling sensing signal to expansion apparatus 1115 and control unit 1420.

Electric power supply source 1422 is provided separately from the electric power supply unit described above configured to supply electric power for operating propulsive mechanism 1202 provided in airframe 1201, and supplies electric power to each of expansion apparatus 1115, control unit 1420, falling sensing unit 1421, position detector 1423, downward condition detector 1424, image analyzer 1425, and notification unit 1426 described above. For example, a lithium ion battery can be employed as electric power supply source 1422.

Position detector 1423 detects position information of airframe 1201. Position detector 1423 is implemented, for example, by at least one of a global navigation satellite system (GNSS) apparatus configured to detect three-dimensional position information of airframe 1201 by using an artificial satellite, an apparatus configured to obtain three-dimensional position information of airframe 1201 by using a base station of a portable telephone, a camera configured to pick up an image of surroundings of airframe 1201, a geomagnetic sensor configured to detect an azimuth of airframe 1201, and an altitude detection apparatus configured to detect an altitude of airframe 1201. The altitude detection apparatus is implemented, for example, by at least one of a barometric pressure sensor, a laser sensor, an ultrasonic sensor, an infrared sensor, millimeter-wave radar, and sub millimeter-wave radar. Control unit 1420 controls control lines 1111 and 1112 based on position information detected by position detector 1423.

Downward condition detector 1424 detects a condition below airframe 1201. Below airframe 1201 means a direction toward the Earth's surface when viewed from airframe 1201 regardless of an attitude of airframe 1201. Downward condition detector 1424 is implemented, for example, by at least one of a camera, an image sensor, an infrared sensor, a laser sensor, an ultrasonic sensor, millimeter-wave radar, and sub millimeter-wave radar. Control unit 1420 determines a target position of falling of airframe 1201 based on information detected by downward condition detector 1424 and controls control lines 1111 and 1112 such that airframe 1201 is steered for the target position of falling.

Image analyzer 1425 determines whether or not there is anybody at the target position of falling based on information detected by downward condition detector 1424. Notification unit 1426 issues an alarm when image analyzer 1425 determines that there is somebody at the target position of falling. Image analyzer 1425 may be implemented by hardware or may functionally be implemented by software.

Remote controller 1300 is used when an operator remotely controls propulsive mechanism 1202 provided in aerial vehicle main body 1200. Remote controller 1300 includes a communication unit (not shown) capable of establishing wireless communication with control unit 1420 and a display 1301 configured to show information detected by downward condition detector 1424.

According to unmanned aerial vehicle 1A in the present embodiment, when falling sensing unit 1421 senses falling of airframe 1201, expansion apparatus 1115 can instantaneously expand lift generation member 1110 and expanded lift generation member 1110 is controlled by control unit 1420 by means of control lines 1111 and 1112. Thus, with lift generated by lift generation member 1110 and air resistance against lift generation member 1110 being combined, a speed of airframe 1201 can be lowered and controlled. Therefore, impact to airframe 1201 at the time of landing is lessened, airframe 1201 is prevented from being swept by a crosswind to enter a no-fly zone or to significantly be displaced from a target position of falling, and airframe 1201 can be guided to the target position of falling. Since falling sensing unit 1421 is provided, falling of airframe 1201 can instantaneously be sensed, so that lift generation member 1110 can be ejected and expanded by expansion apparatus 1115 based on sensing. Furthermore, airframe 1201 can safely be guided based on determination of the condition at a point of falling.

In the present embodiment, separately from the electric power supply unit configured to supply electric power for operating propulsive mechanism 1202 provided in airframe 1201, electric power supply source 1422 configured to supply electric power to expansion apparatus 1115, control unit 1420, and falling sensing unit 1421 is provided in unmanned aerial vehicle 1A. In an example where only an electric power supply unit configured to supply electric power for operating propulsive mechanism 1202 provided in airframe 1201 is provided in unmanned aerial vehicle 1A, for example, when electric power is used up, electric power may no longer be received from the electric power supply unit. According to the present configuration, however, such a situation can be avoided. Even though electric power is no longer supplied from the electric power supply unit for some reason, expansion apparatus 1115, control unit 1420, and falling sensing unit 1421 can be operated by electric power from electric power supply source 1422 provided separately from the electric power supply unit. Electric power supply source 1422 can also be used as a sub power supply of the electric power supply unit.

In the present embodiment, a condition below airframe 1201 can be recognized based on information obtained by downward condition detector 1424. Thus, appropriateness as a position where airframe 1201 is to be landed can be determined. A target position of falling can also be changed depending on the condition below.

In the present embodiment, image analyzer 1425 determines presence of humans. Therefore, collision of airframe 1201 with a human can be avoided. Even though airframe 1201 should inevitably be landed on a location where humans are present, notification unit 1426 issues an alarm so that the location can be evacuated. Collision of airframe 1201 with a human can thus be avoided.

Control unit 1420 determines a target position of falling of airframe 1201 based on information detected by downward condition detector 1424 and controls airframe 1201 to be landed on the target position of falling. Airframe 1201 can thus be guided to a safe landing point.

In the present embodiment, remote controller 1300 includes display 1301 configured to show information detected by downward condition detector 1424. Therefore, as an operator visually checks display 1301, the operator can readily know a condition below airframe 1201. As the operator knows the condition below airframe 1201, airframe 1201 can be manipulated to be guided to a safe location.

### <Modification Based on First Embodiment>

The first embodiment described above is merely an illustration and can variously be modified. For example, a first modification as will be described below is also applicable.

### (First Modification)

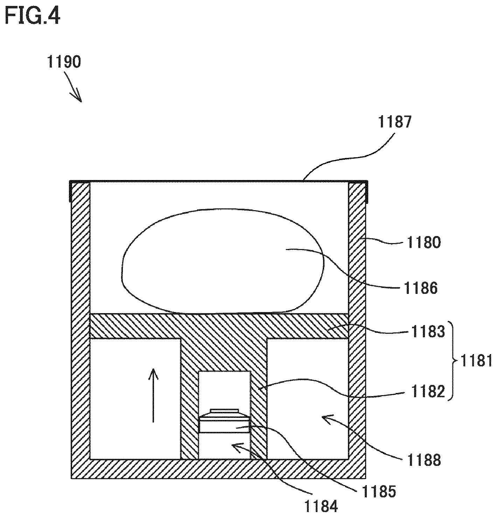

As shown in Fig. 4, an expansion apparatus 1190 according to the first modification includes a pyroactuator 1188 and a lift generation member (for example, a parafoil) 1186. Pyroactuator 1188 includes an igniter 1184 including a cup-shaped case 1185 which accommodates an ignition agent (not shown), a piston 1181 including a recess 1182 and a piston head 1183 formed integrally with recess 1182, and a cylindrical housing 1180 with bottom which accommodates piston 1181 and restricts a direction of propulsion of piston 1181.

Lift generation member 1186 is stored in housing 1180 as being arranged on piston head 1183. As piston 1181 is propelled by a gas pressure generated by igniter 1184 in such a configuration, lift generation member 1186 can directly be pushed out and expanded. An opening end of housing 1180 is closed by a lid 1187 in an initial state, and lid 1187 is removed from the opening end as lift generation member 1186 is pushed out.

### (Other Modifications)

In the first embodiment and the first modification described above, though the control unit, the falling sensing unit, the electric power supply source, the position detector, the downward condition detector, the image analyzer, and the notification unit are provided in the paraglider apparatus, limitation thereto is not intended, and at least one or all of them may be provided in the aerial vehicle main body. When the control unit among them is provided in the aerial vehicle main body, the control unit may be incorporated in a flight controller provided in the airframe. The flight controller refers to an apparatus configured to control flight of the aerial vehicle main body by controlling a propulsive mechanism provided in the airframe.

In the first embodiment and the first modification described above, though the notification unit configured to issue an alarm when the image analyzer as the determination unit determines that there is somebody at a target position of falling is employed, limitation thereto is not intended, and for example, an indicator or a smoke candle may be used to warn that evacuation is required.

Though the first embodiment and the first modification above describe an example of use of a parafoil as the lift generation member, a lift generation member in any form may be employed so long as lift is generated in an expanded state thereof, and a Rogallo paraglider, a Rogallo parachute, a triangular paraglider, and a triangular parachute are also additionally applicable.

The control unit is configured to determine a target position of falling of the airframe based on information detected by the downward condition detector and to control the manipulation mechanism such that the airframe is steered for the target position of falling. When the determination unit determines that there is somebody at the target position of falling, however, the control unit is configured to change the target position of falling and to control the manipulation mechanism such that the airframe is steered for the changed target position of falling.

The first embodiment and the first modification above describe an example in which the control unit is configured to determine a target position of falling of the airframe based on information detected by the downward condition detector. For example, however, when a predetermined flight destination is near, the control unit may alternatively be configured to control the manipulation mechanism such that the airframe is steered for the predetermined flight destination.

Though the first embodiment and the first modification above describe an example in which the present invention is applied to a drone as an unmanned aerial vehicle representing an aerial vehicle, the present invention is similarly applicable also to an unmanned aerial vehicle of another type or a manned aerial vehicle.

### <Summary of First Embodiment and Modification Based on First Embodiment>

The first embodiment and the modification based on the first embodiment disclosed above are summarized as below.

An aerial vehicle based on a first aspect of the present disclosure includes an airframe, a propulsive mechanism provided in the airframe, a lift generation member provided in the airframe in an expandable manner, a manipulation mechanism connected to the lift generation member and configured to manipulate the lift generation member with the lift generation member having been expanded, an expansion apparatus configured to expand the lift generation member, a control unit configured to control the manipulation mechanism, and a falling sensing unit configured to sense falling of the airframe and to provide a falling sensing signal to the expansion apparatus and the control unit. In the aerial vehicle based on the first aspect of the present disclosure, the expansion apparatus is configured to expand the lift generation member upon receiving the falling sensing signal, and the control unit is configured to start control of the manipulation mechanism upon receiving the falling sensing signal.

According to such a configuration, when the falling sensing unit senses falling of the airframe, the expansion apparatus can instantaneously expand the lift generation member and operations by the expanded lift generation member are controlled by the control unit by means of the manipulation mechanism. Thus, with lift generated by the lift generation member and air resistance against the lift generation member being combined, a speed of the airframe can be lowered and controlled. Therefore, impact to the airframe at the time of landing is lessened, the airframe is prevented from being swept by a crosswind to enter a no-fly zone or to significantly be displaced from a target position of falling, and the airframe can be guided to the target position of falling.

In the aerial vehicle based on the first aspect of the present disclosure, preferably, the expansion apparatus expands the lift generation member with propelling power based on a gas pressure produced by burning of gunpowder.

According to such a configuration, the lift generation member can instantaneously be expanded in the case of falling of the airframe.

In the aerial vehicle based on the first aspect of the present disclosure, preferably, the expansion apparatus is attached to an outer surface of the airframe.

According to such a configuration, the expansion apparatus is attached to a surface such as a side surface of the airframe so that the airframe can be landed while the lift generation member has been expanded with the airframe being inclined. By thus inclining the airframe, direct impact applied to various devices provided under he airframe and a lithium ion battery which may be ignited at the time of landing can be avoided.

In the aerial vehicle based on the first aspect of the present disclosure, preferably, the falling sensing unit includes at least one of an acceleration sensor, a gyro sensor, a barometric pressure sensor, a laser sensor, an ultrasonic sensor, and an abnormal vibration sensing apparatus configured to sense abnormal vibration of the propulsive mechanism.

According to such a configuration, falling of the airframe can properly be recognized.

The aerial vehicle based on the first aspect of the present disclosure may further include an electric power supply unit configured to supply electric power for operating the propulsive mechanism and include an electric power supply source configured to supply electric power to the expansion apparatus, the control unit, and the falling sensing unit, separately from the electric power supply unit.

In an example where only an electric power supply unit configured to supply electric power for operating the propulsive mechanism is provided in an unmanned aerial vehicle, for example, when electric power in the electric power supply unit is used up, electric power may no longer be received from the electric power supply unit and the unmanned aerial vehicle may become inoperable. According to the configuration as above, however, such a situation can be avoided. Even though electric power is not supplied from the electric power supply unit for some reason, the paraglider apparatus can be operated by electric power from the electric power supply source. The electric power supply source can also be used as a sub power supply of the electric power supply unit.

In the aerial vehicle based on the first aspect of the present disclosure, preferably, the falling sensing unit includes at least one of an acceleration sensor, a gyro sensor, a barometric pressure sensor, a laser sensor, an ultrasonic sensor, an abnormal vibration sensing apparatus configured to sense abnormal vibration of the propulsive mechanism, and a voltage abnormality sensing apparatus configured to sense voltage abnormality in the electric power supply unit.

According to such a configuration, falling of the airframe can properly be recognized.

The aerial vehicle based on the first aspect of the present disclosure preferably further includes a position detector configured to detect position information of the airframe, and in that case, preferably, the control unit controls the manipulation mechanism based on the position information detected by the position detector.

According to such a configuration, a current position of the airframe can readily be recognized based on position information of the airframe obtained by the position detector so that a target position of falling can be determined based on the position information. In addition, the control unit can appropriately control the manipulation mechanism based on the position information.

When the aerial vehicle based on the first aspect of the present disclosure includes the electric power supply unit, preferably, the position detector includes at least one of a GNSS apparatus configured to obtain the position information by using an artificial satellite, an apparatus configured to obtain the position information by using a base station of a portable telephone, a camera configured to pick up an image of surroundings of the airframe, a geomagnetic sensor configured to detect an azimuth of the airframe, and an altitude detection apparatus configured to detect an altitude of the airframe.

According to such a configuration, highly accurate information representing a position of the airframe can be obtained.

In the aerial vehicle based on the first aspect of the present disclosure, preferably, the altitude detection apparatus includes at least one of a barometric pressure sensor, a laser sensor, an ultrasonic sensor, an infrared sensor, millimeter-wave radar, and sub millimeter-wave radar.

According to such a configuration, highly accurate information representing an altitude of the airframe can be obtained.

The aerial vehicle based on the first aspect of the present disclosure preferably further includes a downward condition detector configured to detect a condition below the airframe.

According to such a configuration, a condition below the airframe can be recognized based on information obtained by the downward condition detector. Thus, appropriateness as a position where the airframe is to be landed can be determined. A target position of falling can also be changed depending on a condition below.

In the aerial vehicle based on the first aspect of the present disclosure, preferably, the downward condition detector includes at least one of a camera, an image sensor, an infrared sensor, a laser sensor, an ultrasonic sensor, millimeter-wave radar, and sub millimeter-wave radar.

According to such a configuration, highly accurate information representing a condition below the airframe can be obtained. A target position of falling of the airframe can thus highly reliably be determined.

The control unit determines a target position of falling of the airframe based on information detected by the downward condition detector and controls the manipulation mechanism such that the airframe is steered for the target position of falling.

According to such a configuration, since a target position of falling of the airframe is determined based on information detected by the downward condition detector, the airframe can be landed on a safe landing point.

The aerial vehicle includes a determination unit configured to determine whether or not there is anybody at the target position of falling based on the information detected by the downward condition detector.

According to such a configuration, since the determination unit determines presence of humans, collision of the airframe with a human can be avoided.

The aerial vehicle based on the first aspect of the present disclosure may further include a notification unit configured to issue an alarm when the determination unit determines that there is somebody at the target position of falling.

According to such a configuration, even though the airframe should inevitably be landed on a location where humans are present, the notification unit issues an alarm so that the location can be evacuated. Collision of the airframe with a human can thus be avoided.

The aerial vehicle based on the first aspect of the present disclosure may further include a remote controller configured to remotely control the propulsive mechanism, and in that case, preferably, the remote controller includes a display configured to show information detected by the downward condition detector.

According to such a configuration, an operator can readily know a condition below the airframe by visually checking the display.

In the aerial vehicle based on the first aspect of the present disclosure, the airframe may be provided with a flight controller configured to control the propulsive mechanism, and in that case, preferably, the control unit is incorporated in the flight controller.

According to such a configuration, a weight of the control unit in the paraglider apparatus is reduced, and accordingly the paraglider apparatus can be reduced in weight.

The aerial vehicle based on the first aspect of the present disclosure may be an unmanned aerial vehicle.

According to such a configuration, the possibility of a falling accident of an unmanned aerial vehicle can significantly be lowered.

A method of controlling an aerial vehicle based on the first aspect of the present disclosure includes, when the aerial vehicle includes an airframe, a propulsive mechanism provided in the airframe, a lift generation member provided in the airframe in an expandable manner, a manipulation mechanism connected to the lift generation member and configured to manipulate the lift generation member with the lift generation member having been expanded, an expansion apparatus configured to expand the lift generation member, a control unit configured to control the manipulation mechanism, and a falling sensing unit configured to sense falling of the airframe and to provide a falling sensing signal to the expansion apparatus and the control unit, the expansion apparatus expanding the lift generation member upon receiving the falling sensing signal and the control unit starting control of the manipulation mechanism upon receiving the falling sensing signal.

According to such a configuration, when the falling sensing unit senses falling of the airframe, the expansion apparatus can instantaneously expand the lift generation member and operations by the expanded lift generation member are controlled by the control unit by means of the manipulation mechanism. Thus, with lift generated by the lift generation member and air resistance against the lift generation member being combined, a speed of the airframe can be lowered and controlled. Therefore, impact to the airframe at the time of landing is lessened, the airframe is prevented from being swept by a crosswind to enter a no-fly zone or to significantly be displaced from a target position of falling, and the airframe can be guided to the target position of falling.

### <Second Embodiment>

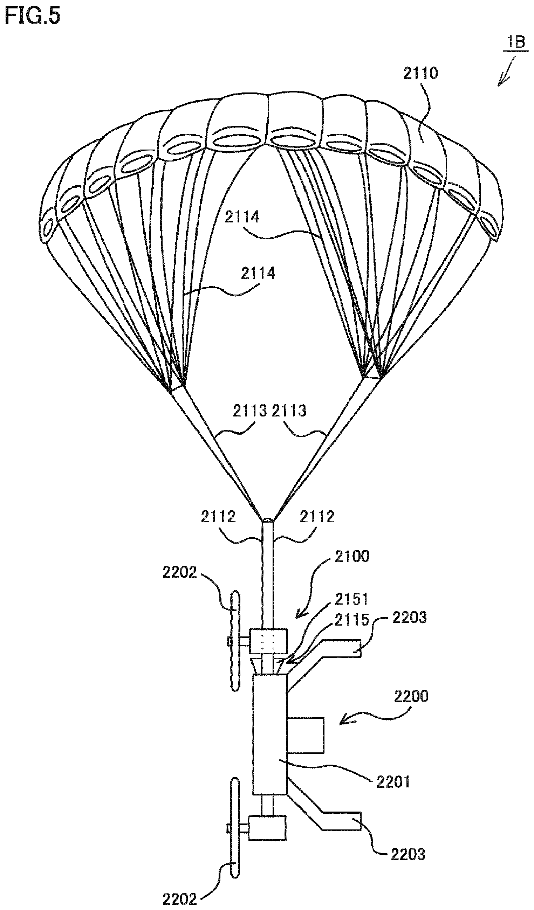

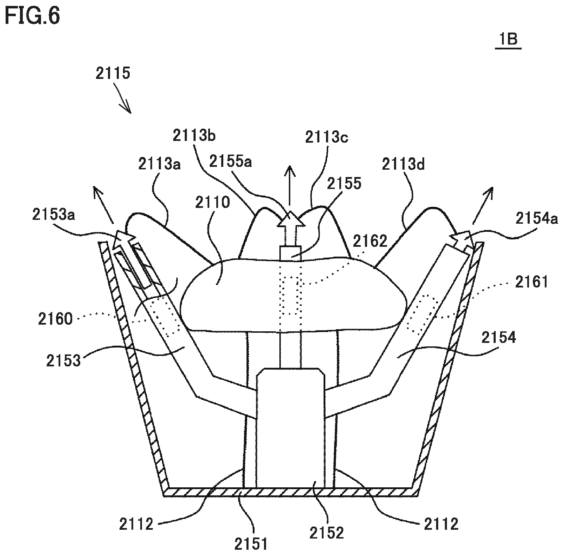

As shown in Fig. 5, an unmanned aerial vehicle 1B according to the present embodiment includes an aerial vehicle main body 2200, a paraglider apparatus 2100 assembled to aerial vehicle main body 2200, and a propulsive mechanism controller provided in aerial vehicle main body 2200. A lift generation member 2110 (for example, a parafoil) included in paraglider apparatus 2100 is stored in a storage container 2151 of paraglider apparatus 2100 as shown in Fig. 6 while unmanned aerial vehicle 1B normally flies, and it is ejected to the outside of storage container 2151 of paraglider apparatus 2100 and expanded as shown in Fig. 5 in the case of falling of unmanned aerial vehicle 1B.

Paraglider apparatus 2100 includes lift generation member 2110 described above and an expansion apparatus 2115 connected to lift generation member 2110 and configured to expand lift generation member 2110.

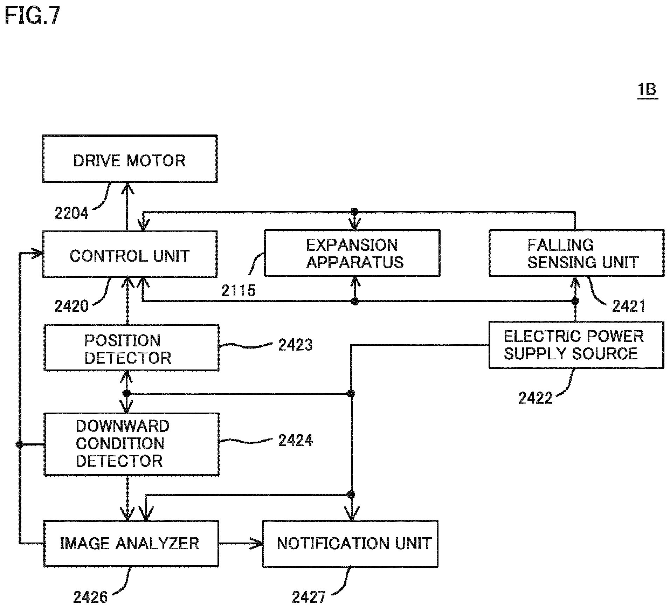

Aerial vehicle main body 2200 includes an airframe 2201, at least one propulsive mechanism 2202 (for example, a propeller and a drive motor 2204 configured to drive the propeller (see Fig. 7)) assembled to airframe 2201 and configured to propel airframe 2201, and a plurality of legs 2203 provided under airframe 2201.

As shown in Fig. 7, the propulsive mechanism controller includes a control unit (a computer including a CPU, a ROM, or a RAM) 2420 configured to control drive motor 2204 of propulsive mechanism 2202, a falling sensing unit 2421, an electric power supply source 2422, a position detector 2423, a downward condition detector 2424, an image analyzer 2426 as a determination unit, and a notification unit 2427. Since the propulsive mechanism controller is provided in aerial vehicle main body 2200 as described above, control unit 2420, falling sensing unit 2421, electric power supply source 2422, position detector 2423, downward condition detector 2424, image analyzer 2426, and notification unit 2427 are also provided in aerial vehicle main body 2200.

Lift generation member 2110 is configured to be expandable by expansion apparatus 2115. As described above, in the initial state, lift generation member 2110 is arranged in an unexpanded state as shown in Fig. 6, and set to a state as shown in Fig. 5 by being expanded by expansion apparatus 2115.

As shown in Fig. 5, expansion apparatus 2115 is provided on airframe 2201 of aerial vehicle main body 2200. More specifically, expansion apparatus 2115 is provided on a side surface of airframe 2201. Expansion apparatus 2115 includes a cup-shaped storage container 2151 which stores yet-to-be-expanded lift generation member 2110, a plurality of first suspension lines 2112 having one ends fixed to a bottom of storage container 2151, a plurality of second suspension lines 2113 having one ends connected to first suspension lines 2112, and a plurality of third suspension lines 2114 having one ends connected to second suspension lines 2113 and the other ends connected to lift generation member 2110.

As shown in Fig. 6, expansion apparatus 2115 further includes a support post 2152 provided on an inner bottom of storage container 2151 and three pipe portions 2153, 2154, and 2155 including respective pyroactuators 2160, 2161, and 2162 therein and coupled to support post 2152. Pyroactuator 2160 is provided in pipe portion 2153, pyroactuator 2161 is provided in pipe portion 2154, and pyroactuator 2162 is provided in pipe portion 2155. Pipe portions 2153, 2154, and 2155 are arranged, for example, like umbrella ribs. Since pyroactuators 2160, 2161, and 2162 have been known, detailed description thereof will not be provided, however, they are configured to generate a gas pressure as a result of burning of an ignition agent by an igniter and to propel the piston by the gas pressure.

A projectile 2153a is inserted in pipe portion 2153 as being partially exposed. A projectile 2154a is similarly inserted in pipe portion 2154 as being partially exposed. A projectile 2155a is further similarly inserted in pipe portion 2155 as being partially exposed. Lift generation member 2110 is coupled to projectile 2153a by a string 2113a and coupled to projectile 2155a by a string 2113b. Lift generation member 2110 is coupled to projectile 2155a by a string 2113c and coupled to projectile 2154a by a string 2113d.

In such a configuration, projectile 2153a is ejected by propulsion of the piston by pyroactuator 2160, projectile 2154a is ejected by propulsion of the piston by pyroactuator 2161, and projectile 2155a is ejected by propulsion of the piston by pyroactuator 2162, so that strings 2113a, 2113b, 2113c, and 2113d are pulled in a direction of ejection and lift generation member 2110 is thus expanded. At that time, lift generation member 2110 is kept connected by being restricted by first suspension lines 2112 owing to one ends of first suspension lines 2112 fixed to the bottom of storage container 2151.

Referring to Fig. 7, falling sensing unit 2421 is implemented, for example, by at least one of an acceleration sensor, a gyro sensor, a barometric pressure sensor, a laser sensor, an ultrasonic sensor, an abnormal vibration sensing unit configured to sense abnormal vibration of propulsive mechanism 2202 (a motor which rotates a propeller) provided in airframe 2201, and a voltage abnormality sensing unit configured to sense voltage abnormality in an electric power supply unit (not shown) configured to supply electric power for operating propulsive mechanism 2202 provided in airframe 2201. For example, in an example where falling sensing unit 2421 includes the acceleration sensor, when a situation enters a state set in advance, for example, when the acceleration sensor detects an acceleration equal to or higher than a prescribed level (for example, an acceleration set in advance beyond which assumption of falling is made), falling sensing unit 2421 provides a falling sensing signal indicating falling of airframe 2201 to expansion apparatus 2115 and control unit 2420.

Expansion apparatus 2115 expands lift generation member 2110 upon receiving the falling sensing signal, and control unit 2420 guides airframe 2201 to a target position of falling which will be described later by controlling drive motor 2204 of propulsive mechanism 2202 upon receiving the falling sensing signal. In the present embodiment, control unit 2420 controls drive motor 2204 also while unmanned aerial vehicle 1B normally flies. The number of rotations of drive motor 2204 during normal flying may be the same as or different from the number of rotations of drive motor 2204 during guiding in the case of falling.

Electric power supply source 2422 is provided separately from the above-described electric power supply unit configured to supply electric power for operating propulsive mechanism 2202 provided in airframe 2201 during normal flying, and supplies electric power to each of expansion apparatus 2115, control unit 2420, falling sensing unit 2421, position detector 2423, downward condition detector 2424, image analyzer 2426, and notification unit 2427 described above. Furthermore, electric power supply source 2422 can supply electric power also to drive motor 2204 of propulsive mechanism 2202 in addition to each component described above during falling. For example, a lithium ion battery can be employed as electric power supply source 2422.

Position detector 2423 detects position information of airframe 2201. Position detector 2423 is implemented, for example, by at least one of a GNSS apparatus configured to detect three-dimensional position information of airframe 2201 by using an artificial satellite, an apparatus configured to obtain three-dimensional position information of airframe 2201 by using a base station of a portable telephone, a camera configured to pick up an image of surroundings of airframe 2201, a geomagnetic sensor configured to detect an azimuth of airframe 2201, and an altitude detection apparatus configured to detect an altitude of airframe 2201. The altitude detection apparatus is implemented by at least one of a barometric pressure sensor, a laser sensor, an ultrasonic sensor, an infrared sensor, millimeter-wave radar, and sub millimeter-wave radar. Control unit 2420 determines a target position of falling of airframe 2201 based on the position information detected by position detector 2423 and controls drive motor 2204 of propulsive mechanism 2202 such that airframe 2201 is steered for the target position of falling.

Downward condition detector 2424 detects a condition below airframe 2201. Below airframe 2201 means a direction toward the Earth's surface when viewed from airframe 2201 regardless of an attitude of airframe 2201. Downward condition detector 2424 is implemented, for example, by at least one of a camera, an image sensor, an infrared sensor, a laser sensor, an ultrasonic sensor, millimeter-wave radar, and sub millimeter-wave radar. Control unit 2420 determines a target position of falling of airframe 2201 based on position information of airframe 2201 detected by position detector 2423 and information detected by downward condition detector 2424.

Image analyzer 2426 determines whether or not there is anybody at the target position of falling based on information detected by downward condition detector 2424. Notification unit 2427 issues an alarm when image analyzer 2426 determines that there is somebody at the target position of falling. Image analyzer 2426 may be implemented by hardware or may functionally be implemented by software.

According to unmanned aerial vehicle 1B in the present embodiment, in the case of falling of airframe 2201, expansion apparatus 2115 can instantaneously expand lift generation member 2110. Thus, with lift generated by lift generation member 2110 and air resistance against lift generation member 2110 being combined, a speed of airframe 2201 can be lowered so that impact to airframe 2201 at the time of landing can sufficiently be lessened. Operations by propulsive mechanism 2202 are controlled by control unit 2420 during falling of airframe 2201, so that airframe 2201 can be guided to the target position of falling. Thus, airframe 2201 is prevented from being swept by a crosswind to enter a no-fly zone or to significantly be displaced from the target position of falling. Since falling sensing unit 2421 is provided, falling of airframe 2201 can instantaneously be sensed, so that lift generation member 2110 can be ejected and expanded by expansion apparatus 2115 based on sensing. Furthermore, airframe 2201 can safely be guided based on determination of the condition at a point of falling.

In the present embodiment, propulsive mechanism 2202 provided in airframe 2201 can be used in both of normal flying and falling. Propulsive mechanism 2202 is thus used for both of an application for guiding airframe 2201 to the target position of falling during falling of airframe 2201 and an application for normal flying so that it is not necessary to separately provide a propulsive mechanism for guiding during falling.

In the present embodiment, expansion apparatus 2115 is attached to the side surface of airframe 2201 so that airframe 2201 can be landed with airframe 2201 being inclined while lift generation member 2110 has been expanded. By thus inclining airframe 2201, direct impact applied to various devices provided under airframe 2201 and a lithium ion battery which may be ignited at the time of landing can be avoided.

In the present embodiment, separately from the electric power supply unit configured to supply electric power for operating propulsive mechanism 2202 provided in airframe 2201, electric power supply source 2422 configured to supply electric power to the propulsive mechanism controller is provided in unmanned aerial vehicle 1B. In an example where only an electric power supply unit configured to supply electric power for operating propulsive mechanism 2202 provided in airframe 2201 is provided in unmanned aerial vehicle 1B, for example, when electric power is used up, electric power may no longer be received from the electric power supply unit. According to the present configuration, however, such a situation can be avoided. Even though electric power is not supplied from the electric power supply unit for some reason, the propulsive mechanism controller can be operated by electric power from electric power supply source 2422 provided separately from the electric power supply source. Electric power supply source 2422 can also be used as a sub power supply of the electric power supply unit.

In the present embodiment, a condition below airframe 2201 can be recognized based on information obtained by downward condition detector 2424. Thus, appropriateness as a position where airframe 2201 is to be landed can be determined. A target position of falling can also be changed depending on the condition below.

In the present embodiment, image analyzer 2426 determines presence of humans. Therefore, collision of airframe 2201 with a human can be avoided. Even though airframe 2201 should inevitably be landed on a location where humans are present, notification unit 2427 issues an alarm so that the location can be evacuated. Collision of airframe 2201 with a human can thus be avoided.

In the present embodiment, a current position of airframe 2201 can readily be recognized based on position information of airframe 2201 obtained by position detector 2423. The position information can be used as information in determining a target position of falling of airframe 2201.

In the present embodiment, since a target position of falling of airframe 2201 is determined based on position information detected by position detector 2423, airframe 2201 is readily guided to the target position of falling.

### <Modification Based on Second Embodiment>

The second embodiment described above is merely an illustration and can variously be modified. For example, second and third modifications as will be described below are also applicable.

### (Second Modification)

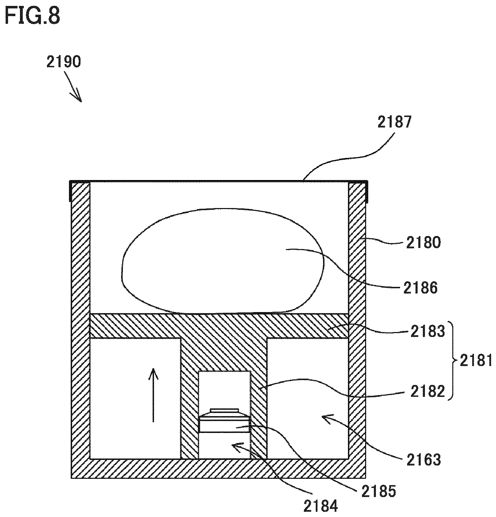

As shown in Fig. 8, an expansion apparatus 2190 according to the second modification includes, for example, a pyroactuator and a lift generation member in a housing having one open end, and it is configured to directly push out and expand the lift generation member by propelling power of a piston of the pyroactuator.

Specifically, expansion apparatus 2190 includes a pyroactuator 2163 and a lift generation member 2186. Pyroactuator 2163 includes an igniter 2184 including a cup-shaped case 2185 which accommodates an ignition agent (not shown), a piston 2181 including a recess 2182 and a piston head 2183 formed integrally with recess 2182, and a cylindrical housing 2180 with bottom which accommodates piston 2181 and restricts a direction of propulsion of piston 2181.

Lift generation member 2186 is stored in housing 2180 as being arranged on piston head 2183, and it is what is called a parachute. As piston 2181 is propelled by a gas pressure generated by igniter 2184 in such a configuration, lift generation member 2186 can directly be pushed out and expanded. An opening end of housing 2180 is closed by a lid 2187 in the initial state, and lid 2187 is removed from the opening end as lift generation member 2186 is pushed out.

### (Third Modification)

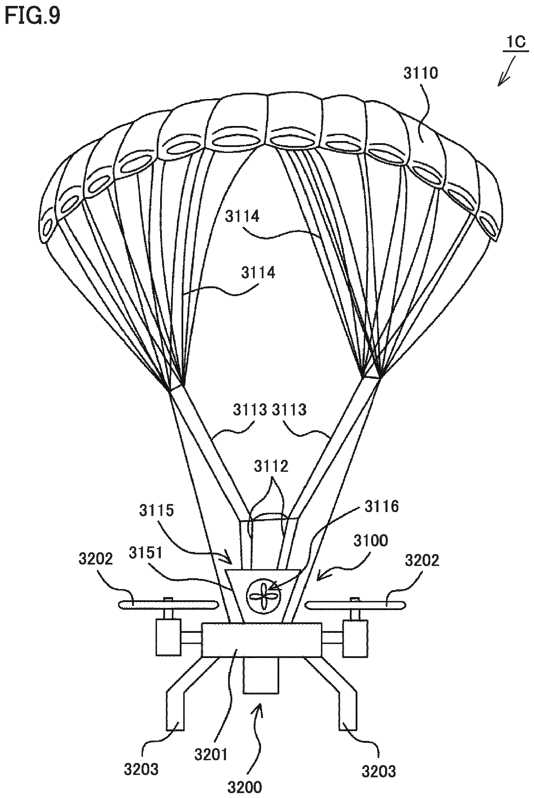

As shown in Fig. 9, an unmanned aerial vehicle 1C according to the third modification includes a propulsive apparatus in the case of falling (a motor and a propeller) 3116 configured to propel unmanned aerial vehicle 1C during falling (that is, during guiding the unmanned aerial vehicle to a target position of falling) separately from a propulsive mechanism 3202 activated during normal flying. A paraglider apparatus 3100 configured as such is what is called a motor paraglider apparatus. Propulsive apparatus in the case of falling 3116 is provided, for example, on a side surface of a storage container 3151.

Unmanned aerial vehicle 1C according to the third modification is otherwise basically similar in configuration to unmanned aerial vehicle 1B according to the second embodiment described above and description thereof will not be repeated. A feature having a reference numeral identical in last three digits to the feature shown in Fig. 5 is basically similar to the feature described with reference to Fig. 5.

According to such a configuration, in particular, even though propulsive mechanism 3202 activated during normal flying fails, propulsive apparatus in the case of falling 3116 is appropriately operated and controlled, so that an airframe 3201 can be guided to the target position of falling.

### (Other Modifications)

In the second embodiment and the second and third modifications described above, though the control unit, the falling sensing unit, the electric power supply source, the position detector, the downward condition detector, the image analyzer, and the notification unit are provided in the aerial vehicle main body, limitation thereto is not intended, and at least one or all of them may be provided in the paraglider apparatus.

In the second embodiment and the second and third modifications described above, though the notification unit configured to issue an alarm when the image analyzer as the determination unit determines that there is somebody at a target position of falling is employed, limitation thereto is not intended, and for example, an indicator or a smoke candle may be used to warn that evacuation is required.

Though the second embodiment and the second and third modifications above describe an example of use of a parafoil as the lift generation member, a lift generation member in any form may be employed so long as lift is generated in an expanded state thereof, and a Rogallo paraglider, a Rogallo parachute, a triangular paraglider, and a triangular parachute are also additionally applicable.

The control unit is configured to determine a target position of falling of the airframe based on information detected by the downward condition detector and to control the propulsive mechanism such that the airframe is steered for the target position of falling. When the determination unit determines that there is somebody at the target position of falling, however, the control unit is configured to change the target position of falling and to control the propulsive mechanism such that the airframe is steered for the changed target position of falling.

The second embodiment and the second and third modifications above describe an example in which the control unit is configured to determine a target position of falling of the airframe based on information detected by the downward condition detector. For example, however, when a predetermined flight destination is near, the control unit may alternatively be configured to control the propulsive mechanism such that the airframe is steered for the predetermined flight destination.

In the unmanned aerial vehicle according to the second embodiment and the second and third modifications described above as well, a remote controller may be provided as in the first embodiment described above. The remote controller is used when an operator remotely controls the propulsive mechanism provided in the airframe. In that case, the remote controller preferably includes a display configured to show information detected by the downward condition detector. According to such a configuration, the operator can readily know a condition below the airframe by visually checking the display, and consequently, the airframe can be manipulated to be guided to a safe location.

Though the second embodiment and the second and third modifications above describe an example in which the present invention is applied to a drone as an unmanned aerial vehicle representing an aerial vehicle, the present invention is similarly applicable also to an unmanned aerial vehicle of another type or a manned aerial vehicle.

### <Summary of Second Embodiment and Modifications Based on Second Embodiment>

The second embodiment and the modifications based on the second embodiment disclosed above are summarized as below.

An aerial vehicle based on a second aspect of the present disclosure includes an airframe, a propulsive mechanism provided in the airframe, a lift generation member provided in the airframe in an expandable manner, an expansion apparatus configured to expand the lift generation member, a control unit configured to control the propulsive mechanism, and a falling sensing unit configured to sense falling of the airframe and to provide a falling sensing signal to the expansion apparatus and the control unit. In the aerial vehicle based on the second aspect of the present disclosure, the expansion apparatus is configured to expand the lift generation member upon receiving the falling sensing signal, and the control unit is configured to determine a target position of falling of the airframe upon receiving the falling sensing signal and to control the propulsive mechanism such that the airframe is steered for the target position of falling.

According to such a configuration, in the case of falling of the airframe, the expansion apparatus can instantaneously expand the lift generation member. Thus, with lift generated by the lift generation member and air resistance against the lift generation member being combined, a speed of the airframe can be lowered and hence impact to the airframe at the time of landing can sufficiently be lessened. As operations by the propulsive mechanism are controlled by the control unit, the airframe can be guided to the target position of falling. Thus, the airframe is prevented from being swept by a crosswind to enter a no-fly zone or to significantly be displaced from the target position of falling.

In the aerial vehicle based on the second aspect of the present disclosure, the propulsive mechanism may be used while the aerial vehicle normally flies.

According to such a configuration, the propulsive mechanism can be used for both of an application for guiding the airframe to the target position of falling during falling of the airframe and an application for normal flying so that it is not necessary to separately provide a propulsive mechanism for guiding.

In the aerial vehicle based on the second aspect of the present disclosure, the propulsive mechanism may include a propulsive mechanism used in normal flying of the aerial vehicle and a propulsive mechanism used only during falling of the aerial vehicle. In that case, the propulsive mechanism controlled by the control unit upon reception of the falling sensing signal such that the airframe is steered for the target position of falling may be used only during falling of the aerial vehicle.

According to such a configuration, in particular, even though the propulsive mechanism activated during normal flying fails, the airframe can be guided to the target position of falling.

In the aerial vehicle based on the second aspect of the present disclosure, preferably, the expansion apparatus expands the lift generation member with propelling power based on a gas pressure produced by burning of gunpowder.

According to such a configuration, the lift generation member can instantaneously be expanded in the case of falling of the airframe.

In the aerial vehicle based on the second aspect of the present disclosure, preferably, the expansion apparatus is attached to an outer surface of the airframe.

According to such a configuration, the expansion apparatus is attached to a surface such as a side surface of the airframe so that the airframe can be landed while the lift generation member has been expanded with the airframe being inclined. By thus inclining the airframe, direct impact applied to various devices provided under the airframe and a lithium ion battery which may be ignited at the time of landing can be avoided.

In the aerial vehicle based on the second aspect of the present disclosure, preferably, the falling sensing unit includes at least one of an acceleration sensor, a gyro sensor, a barometric pressure sensor, a laser sensor, an ultrasonic sensor, and an abnormal vibration sensing apparatus configured to sense abnormal vibration of the propulsive mechanism.

According to such a configuration, falling of the airframe can properly be recognized.

The aerial vehicle based on the second aspect of the present disclosure may further include an electric power supply unit configured to supply electric power for operating the propulsive mechanism and include an electric power supply source configured to supply electric power to the expansion apparatus, the control unit, and the falling sensing unit, separately from the electric power supply unit.

In an example where only an electric power supply unit configured to supply electric power for operating the propulsive mechanism is provided in an unmanned aerial vehicle, for example, when electric power in the electric power supply unit is used up, electric power may no longer be received from the electric power supply unit and the unmanned aerial vehicle may become inoperable. According to the configuration as above, however, such a situation can be avoided. Even though electric power is not supplied from the electric power supply unit for some reason, the propulsive mechanism controller can be operated by electric power from the electric power supply source. The electric power supply source can also be used as a sub power supply of the electric power supply unit.

When the aerial vehicle based on the second aspect of the present disclosure includes the electric power supply unit, preferably, the falling sensing unit includes at least one of an acceleration sensor, a gyro sensor, a barometric pressure sensor, a laser sensor, an ultrasonic sensor, an abnormal vibration sensing apparatus configured to sense abnormal vibration of the propulsive mechanism, and a voltage abnormality sensing apparatus configured to sense voltage abnormality in the electric power supply unit.

According to such a configuration, falling of the airframe can properly be recognized.

The aerial vehicle based on the second aspect of the present disclosure preferably further includes a position detector configured to detect position information of the airframe, and in that case, preferably, the control unit determines a target position of falling based on the position information detected by the position detector and controls the propulsive mechanism such that the airframe is steered for the target position of falling based on the position information detected by the position detector.

According to such a configuration, a current position of the airframe can readily be recognized based on the position information of the airframe obtained by the position detector so that a target position of falling can be determined based on the position information. In addition, the control unit can appropriately control the propulsive mechanism based on the position information.

In the aerial vehicle based on the second aspect of the present disclosure, preferably, the position detector includes at least one of a GNSS apparatus configured to obtain the position information by using an artificial satellite, an apparatus configured to obtain the position information by using a base station of a portable telephone, a camera configured to pick up an image of surroundings of the airframe, a geomagnetic sensor configured to detect an azimuth of the airframe, and an altitude detection apparatus configured to detect an altitude of the airframe.

According to such a configuration, highly accurate information representing a position of the airframe can be obtained.

In the aerial vehicle based on the second aspect of the present disclosure, preferably, the altitude detection apparatus includes at least one of a barometric pressure sensor, a laser sensor, an ultrasonic sensor, an infrared sensor, millimeter-wave radar, and sub millimeter-wave radar.

According to such a configuration, highly accurate information representing an altitude of the airframe can be obtained.

The aerial vehicle includes a downward condition detector configured to detect a condition below the airframe.

According to such a configuration, a condition below the airframe can be recognized based on information obtained by the downward condition detector. Thus, appropriateness as a position where the airframe is to be landed can be determined. A target position of falling can also be changed depending on a condition below.

In the aerial vehicle based on the second aspect of the present disclosure, preferably, the downward condition detector includes at least one of a camera, an image sensor, an infrared sensor, a laser sensor, an ultrasonic sensor, millimeter-wave radar, and sub millimeter-wave radar.

According to such a configuration, highly accurate information representing a condition below the airframe can be obtained. A target position of falling of the airframe can thus highly reliably be determined.

The aerial vehicle includes a determination unit configured to determine whether or not there is anybody at the target position of falling based on the information detected by the downward condition detector.

According to such a configuration, since the determination unit determines presence of humans, collision of the airframe with a human can be avoided.

The aerial vehicle based on the second aspect of the present disclosure may further include a notification unit configured to issue an alarm when the determination unit determines that there is somebody at the target position of falling.

According to such a configuration, even though the airframe should inevitably be landed on a location where humans are present, the notification unit issues an alarm so that the location can be evacuated. Collision of the airframe with a human can thus be avoided.

The aerial vehicle based on the second aspect of the present disclosure may further include a remote controller configured to remotely control the propulsive mechanism, and in that case, preferably, the remote controller includes a display configured to show information detected by the downward condition detector.

According to such a configuration, an operator can readily know a condition below the airframe by visually checking the display.

The aerial vehicle based on the second aspect of the present disclosure may be an unmanned aerial vehicle.

According to such a configuration, the possibility of a falling accident of an unmanned aerial vehicle can significantly be lowered.

A method of controlling an aerial vehicle based on the second aspect of the present disclosure includes, when the aerial vehicle includes an airframe, a propulsive mechanism provided in the airframe, a lift generation member provided in the airframe in an expandable manner, an expansion apparatus configured to expand the lift generation member, a control unit configured to control the propulsive mechanism, and a falling sensing unit configured to sense falling of the airframe and to provide a falling sensing signal to the expansion apparatus and the control unit, the expansion apparatus expanding the lift generation member upon receiving the falling sensing signal, the control unit determining a target position of falling of the airframe upon receiving the falling sensing signal, and the control unit controlling the propulsive mechanism such that the airframe is steered for the target position of falling.

According to such a configuration, in the case of falling of the airframe, the expansion apparatus can instantaneously expand the lift generation member. Thus, with lift generated by the lift generation member and air resistance against the lift generation member being combined, a speed of the airframe can be lowered and hence impact to the airframe at the time of landing can sufficiently be lessened. Furthermore, operations by the propulsive mechanism are controlled by the control unit so that the airframe can be guided to the target position of falling. Thus, the airframe is prevented from being swept by a crosswind to enter a no-fly zone or to significantly be displaced from the target position of falling.

It should be understood that the embodiments and the modifications thereof disclosed herein are illustrative and non-restrictive in every respect insofar as they fall within the scope of the appended claims.

### REFERENCE SIGNS LIST

1A, 1B, 1C unmanned aerial vehicle; 1100 paraglider apparatus; 1110 lift generation member; 1111, 1112 control line; 1113 first suspension line; 1113a, 1113b, 1113c, 1113d string; 1114 second suspension line; 1115 expansion apparatus; 1151 storage container; 1152 cylinder portion; 1153 pipe portion; 1153a projectile; 1154 pipe portion; 1154a projectile; 1155 pipe portion; 1155a projectile; 1180 housing; 1181 piston; 1182 recess; 1183 piston head; 1184 igniter; 1185 case; 1186 lift generation member; 1187 lid; 1188 pyroactuator; 1190 expansion apparatus; 1200 aerial vehicle main body; 1201 airframe; 1202 propulsive mechanism; 1203 leg; 1300 remote controller; 1301 display; 1420 control unit; 1421 falling sensing unit; 1422 electric power supply source; 1423 position detector; 1424 downward condition detector; 1425 image analyzer; 1426 notification unit; 2100 paraglider apparatus; 2110 lift generation member; 2112 first suspension line; 2113 second suspension line; 2113a, 2113b, 2113c, 2113d string; 2114 third suspension line; 2115 expansion apparatus; 2151 storage container; 2152 support post; 2153 pipe portion; 2153a projectile; 2154 pipe portion; 2154a projectile; 2155 pipe portion; 2155a projectile; 2160, 2161, 2162, 2163 pyroactuator; 2180 housing; 2181 piston; 2182 recess; 2183 piston head; 2184 igniter; 2185 case; 2186 lift generation member; 2187 lid; 2190 expansion apparatus; 2200 aerial vehicle main body; 2201 airframe; 2202 propulsive mechanism; 2203 leg; 2204 drive motor; 2420 control unit; 2421 falling sensing unit; 2422 electric power supply source; 2423 position detector; 2424 downward condition detector; 2426 image analyzer; 2427 notification unit; 3100 paraglider apparatus; 3110 lift generation member; 3112 first suspension line; 3113 second suspension line; 3114 third suspension line; 3115 expansion apparatus; 3116 propulsive apparatus in the case of falling; 3151 storage container; 3200 aerial vehicle main body; 3201 airframe; 3202 propulsive mechanism; 3203 leg

## Claims

1. An aerial vehicle (1A, 1B, 1C) comprising:
an airframe (1201; 2201; 3201);
a propulsive mechanism (1202; 2202; 3202) provided in the airframe (1201; 2201; 3201);
a lift generation member (1110; 1186; 2110; 2186; 3110) provided in the airframe (1201; 2201; 3201) in an expandable manner;
an expansion apparatus (1115; 1190; 2115; 2190; 3115) configured to expand the lift generation member (1110; 1186; 2110; 2186; 3110);
a control unit (1420; 2420); and
a falling sensing unit (1421; 2421) configured to sense falling of the airframe (1201; 2201; 3201) and to provide a falling sensing signal to the expansion apparatus (1115; 1190; 2115; 2190; 3115) and the control unit (1420; 2420),
the expansion apparatus (1115; 1190; 2115; 2190; 3115) being configured to expand the lift generation member (1110; 1186; 2110; 2186; 3110) upon receiving the falling sensing signal,
a manipulation mechanism connected to the lift generation member (1110; 1186; 2110; 2186; 3110) and configured to manipulate the lift generation member (1110; 1186; 2110; 2186; 3110) with the lift generation member (1110; 1186; 2110; 2186; 3110) having been expanded;
a downward condition detector (1424; 2424) configured to detect a condition below the airframe (1201; 2201; 3201); and
a determination unit configured to determine whether there is anybody at a target position of falling based on the information detected by the downward condition detector (1424; 2424), wherein
the control unit (1420; 2420) is configured to control the manipulation mechanism and to start control of the manipulation mechanism upon receiving the falling sensing signal;
the control unit (1420; 2420) is configured to determine the target position of falling of the airframe (1201; 2201; 3201) based on information detected by the downward condition detector (1424; 2424) and to control the manipulation mechanism such that the airframe (1201; 2201; 3201) is steered for the target position of falling; and
the control unit (1420; 2420) is configured to change the target position of falling and to control the manipulation mechanism such that the airframe (1201; 2201; 3201) is steered for the changed target position of falling, when the determination unit determines that there is somebody at the target position of falling.

2. The aerial vehicle (1A, 1B, 1C) according to claim 1, wherein
the expansion apparatus (1115; 1190; 2115; 2190; 3115) expands the lift generation member (1110; 1186; 2110; 2186; 3110) with propelling power based on a gas pressure produced by burning of gunpowder.

3. The aerial vehicle (1A, 1B, 1C) according to claim 1 or 2, wherein
the expansion apparatus (1115; 1190; 2115; 2190; 3115) is attached to an outer surface of the airframe (1201; 2201; 3201).

4. The aerial vehicle (1A, 1B, 1C) according to any one of claims 1 to 3, wherein
the falling sensing unit (1421; 2421) includes at least one of an acceleration sensor, a gyro sensor, a barometric pressure sensor, a laser sensor, an ultrasonic sensor, and an abnormal vibration sensing apparatus configured to sense abnormal vibration of the propulsive mechanism (1202; 2202; 3202).

5. The aerial vehicle (1A, 1B, 1C) according to any one of claims 1 to 3, further comprising:
an electric power supply unit configured to supply electric power for operating the propulsive mechanism (1202; 2202; 3202); and
an electric power supply source (1422; 2422) configured to supply electric power to the expansion apparatus (1115; 1190; 2115; 2190; 3115), the control unit (1420; 2420), and the falling sensing unit (1421; 2421), separately from the electric power supply unit.

6. The aerial vehicle (1A, 1B, 1C) according to claim 5, wherein
the falling sensing unit (1421; 2421) includes at least one of an acceleration sensor, a gyro sensor, a barometric pressure sensor, a laser sensor, an ultrasonic sensor, an abnormal vibration sensing apparatus configured to sense abnormal vibration of the propulsive mechanism (1202; 2202; 3202), and a voltage abnormality sensing apparatus configured to sense voltage abnormality in the electric power supply unit.

7. The aerial vehicle (1A, 1B, 1C) according to any one of claims 1 to 6, further comprising a position detector (1423; 2423) configured to detect position information of the airframe (1201; 2201; 3201), wherein
the control unit (1420; 2420) controls the manipulation mechanism based on the position information detected by the position detector (1423; 2423).

8. The aerial vehicle (1A, 1B, 1C) according to claim 7, wherein
the position detector (1423; 2423) includes at least one of a GNSS apparatus configured to obtain the position information by using an artificial satellite, an apparatus configured to obtain the position information by using a base station of a portable telephone, a camera configured to pick up an image of surroundings of the airframe (1201; 2201; 3201), a geomagnetic sensor configured to detect an azimuth of the airframe (1201; 2201; 3201), and an altitude detection apparatus configured to detect an altitude of the airframe (1201; 2201; 3201).

9. The aerial vehicle (1A, 1B, 1C) according to claim 8, wherein
the altitude detection apparatus includes at least one of a barometric pressure sensor, a laser sensor, an ultrasonic sensor, an infrared sensor, millimeter-wave radar, and sub millimeter-wave radar.

10. The aerial vehicle (1A, 1B, 1C) according to claim 1, wherein
the downward condition detector (1424; 2424) includes at least one of a camera, an image sensor, an infrared sensor, a laser sensor, an ultrasonic sensor, millimeter-wave radar, and sub millimeter-wave radar.

11. The aerial vehicle (1A, 1B, 1C) according to claim 1, further comprising a notification unit (1426; 2427) configured to issue an alarm when the determination unit determines that there is somebody at the target position of falling.

12. The aerial vehicle (1A, 1B, 1C) according to any one of claims 1, 10 and 11, further comprising a remote controller (1300) configured to remotely control the propulsive mechanism (1202; 2202; 3202), wherein
the remote controller (1300) includes a display (1301) configured to show information detected by the downward condition detector (1424; 2424).

13. The aerial vehicle (1A, 1B, 1C) according to any one of claims 1 to 11, wherein
the airframe (1201; 2201; 3201) is provided with a flight controller configured to control the propulsive mechanism (1202; 2202; 3202), and
the control unit (1420; 2420) is incorporated in the flight controller.

14. The aerial vehicle (1A, 1B, 1C) according to any one of claims 1 to 13 being an unmanned aerial vehicle (1A, 1B, 1C).

15. A method of controlling an aerial vehicle (1A, 1B, 1C), the aerial vehicle (1A, 1B, 1C) including an airframe (1201; 2201; 3201), a propulsive mechanism (1202; 2202; 3202) provided in the airframe (1201; 2201; 3201), a lift generation member (1110; 1186; 2110; 2186; 3110) provided in the airframe (1201; 2201; 3201) in an expandable manner, a manipulation mechanism connected to the lift generation member (1110; 1186; 2110; 2186; 3110) and configured to manipulate the lift generation member (1110; 1186; 2110; 2186; 3110) with the lift generation member (1110; 1186; 2110; 2186; 3110) having been expanded, an expansion apparatus (1115; 1190; 2115; 2190; 3115) configured to expand the lift generation member (1110; 1186; 2110; 2186; 3110), a control unit (1420; 2420) configured to control the manipulation mechanism, a falling sensing unit (1421; 2421) configured to sense falling of the airframe (1201; 2201; 3201) and to provide a falling sensing signal to the expansion apparatus (1115; 1190; 2115; 2190; 3115) and the control unit (1420; 2420), a downward condition detector (1424; 2424) configured to detect a condition below the airframe (1201; 2201; 3201), and a determination unit configured to determine whether there is anybody at a target position of falling based on the information detected by the downward condition detector (1424; 2424) the method comprising:
the expansion apparatus (1115; 1190; 2115; 2190; 3115) expanding the lift generation member (1110; 1186; 2110; 2186; 3110) upon receiving the falling sensing signal;
the control unit (1420; 2420) starting control of the manipulation mechanism upon receiving the falling sensing signal;
the control unit (1420; 2420) determining the target position of falling of the airframe (1201; 2201; 3201) based on information detected by the downward condition detector (1424; 2424) and controlling the manipulation mechanism such that the airframe (1201; 2201; 3201) is steered for the target position of falling; and
the control unit (1420; 2420) changing the target position of falling and controlling the manipulation mechanism such that the airframe (1201; 2201; 3201) is steered for the changed target position of falling, when the determination unit determines that there is somebody at the target position of falling.

## Patentansprüche

1. Luftfahrzeug (1A, 1B, 1C) mit:
einem Flugrahmen (1201; 2201; 3201);
einem Vortriebsmechanismus (1202; 2202; 3302), der bei dem Flugrahmen (1201; 2201; 3201) vorgesehen ist;
einem Auftrieberzeugungselement (1110; 1186; 2110; 2186; 3110), das auf eine expandierbare Weise bei dem Flugrahmen (1201; 2201; 3201) vorgesehen ist;
einer Expansionsvorrichtung (1115; 1190; 2115; 2190; 3115), die konfiguriert ist, das Auftrieberzeugungselement (1110; 1186; 2110; 2186; 3110) zu expandieren;
einer Steuerungseinheit (1420; 2420); und
einer Fallmesseinheit (1421; 2421), die konfiguriert ist, ein Fallen des Flugrahmens (1201; 2201; 3201) zu messen und der Expansionsvorrichtung (1115; 1190; 2115; 2190; 3115) und der Steuerungseinheit (1420; 2420) ein Fallmesssignal bereitzustellen,
wobei die Expansionsvorrichtung (1115; 1190; 2115; 2190; 3115) konfiguriert ist, das Auftrieberzeugungselement (1110; 1186; 2110; 2186; 3110) beim Empfangen des Fallmesssignals zu expandieren,
ein Manipulationsmechanismus mit dem Auftrieberzeugungselement (1110; 1186; 2110; 2186; 3110) verbunden ist und konfiguriert ist, das Auftrieberzeugungselement (1110; 1186; 2110; 2186; 3110) mit dem Auftrieberzeugungselement (1110; 1186; 2110; 2186; 3110), das expandiert worden ist, zu manipulieren;
eine Abwärtsbedingungserfassungseinrichtung (1424; 2424) konfiguriert ist, eine Bedingung unterhalb des Flugrahmens (1201; 2201; 3201) zu erfassen; und
eine Bestimmungseinheit konfiguriert ist, auf der Grundlage der Informationen, die durch die Abwärtsbedingungserfassungseinrichtung (1424; 2424) erfasst werden, zu bestimmen, ob jemand bei einer Sollposition des Fallens ist, wobei
die Steuerungseinheit (1420; 2420) konfiguriert ist, den Manipulationsmechanismus zu steuern und eine Steuerung des Manipulationsmechanismus beim Empfangen des Fallmesssignals zu starten;
die Steuerungseinheit (1420; 2420) konfiguriert ist, auf der Grundlage von Informationen, die durch die Abwärtsbedingungserfassungseinrichtung (1424; 2424) erfasst werden, die Sollposition des Fallens des Flugrahmens (1201; 2201; 3201) zu bestimmen und den Manipulationsmechanismus so zu steuern, dass der Flugrahmen (1201; 2201; 3201) zu der Sollposition des Fallens gelenkt wird; und
die Steuerungseinheit (1420; 2420) konfiguriert ist, die Sollposition des Fallens zu ändern und den Manipulationsmechanismus so zu steuern, dass der Flugrahmen (1201; 2201; 3201) zu der geänderten Sollposition des Fallens gelenkt wird, wenn die Bestimmungseinheit bestimmt, dass jemand bei der Sollposition des Fallens ist.

2. Luftfahrzeug (1A, 1B, 1C) nach Anspruch 1, wobei
die Expansionsvorrichtung (1115; 1190; 2115; 2190; 3115) das Auftrieberzeugungselement (1110; 1186; 2110; 2186; 3110) mit einer Vortriebsleistung auf der Grundlage eines Gasdrucks expandiert, der durch Abbrennen von Schwarzpulver erzeugt wird.

3. Luftfahrzeug (1A, 1B, 1C) nach Anspruch 1 oder 2, wobei
die Expansionsvorrichtung (1115; 1190; 2115; 2190; 3115) an einer Außenfläche des Flugrahmens (1201; 2201; 3201) befestigt ist.

4. Luftfahrzeug (1A, 1B, 1C) nach einem der Ansprüche 1 bis 3, wobei
die Fallmesseinheit (1421; 2421) mindestens einen von einem Beschleunigungssensor, einem Gyrosensor, einem barometrischen Drucksensor, einem Lasersensor, einem Ultraschallsensor und einer Messvorrichtung einer ungewöhnlichen Vibration aufweist, die konfiguriert ist, eine ungewöhnliche Vibration des Vortriebsmechanismus (1202; 2202; 3202) zu messen.

5. Luftfahrzeug (1A, 1B, 1C) nach einem der Ansprüche 1 bis 3, ferner mit:
einer elektrischen Stromversorgungseinheit, die konfiguriert ist, elektrischen Strom zum Betreiben des Vortriebsmechanismus (1202; 2202; 3202) zuzuführen; und
einer elektrischen Stromversorgungsquelle (1422; 2422), die konfiguriert ist, der Expansionsvorrichtung (1115; 1190; 2115; 2190; 3115), der Steuerungseinheit (1420; 2420) und der Fallmesseinheit (1421; 2421) separat von der elektrischen Stromversorgungseinheit elektrischen Strom zuzuführen.

6. Luftfahrzeug (1A, 1B, 1C) nach Anspruch 5, wobei
die Fallmesseinheit (1421; 2421) mindestens einen/eine von einem Beschleunigungssensor, einem Gyrosensor, einem barometrischen Drucksensor, einem Lasersensor, einem Ultraschallsensor, einer Messvorrichtung einer ungewöhnlichen Vibration, die konfiguriert ist, eine ungewöhnliche Vibration des Vortriebsmechanismus (1202; 2202; 3202) zu messen, und einer Messvorrichtung einer Spannungsabnormalität aufweist, die konfiguriert ist, eine Spannungsabnormalität bei der elektrischen Stromversorgungseinheit zu messen.

7. Luftfahrzeug (1A, 1B, 1C) nach einem der Ansprüche 1 bis 6, ferner mit einer Positionserfassungseinrichtung (1423; 2423), die konfiguriert ist, Positionsinformationen des Flugrahmens (1201; 2201; 3201) zu erfassen, wobei
die Steuerungseinheit (1420; 2420) den Manipulationsmechanismus auf der Grundlage der Positionsinformationen steuert, die durch die Positionserfassungseinrichtung (1423; 2423) erfasst werden.

8. Luftfahrzeug (1A, 1B, 1C) nach Anspruch 7, wobei
die Positionserfassungseinrichtung (1423; 2423) mindestens eine/einen von einer GNSS-Vorrichtung, die konfiguriert ist, die Positionsinformationen durch eine Verwendung eines künstlichen Satelliten zu erhalten, einer Vorrichtung, die konfiguriert ist, die Positionsinformationen durch eine Verwendung einer Basisstation eines portablen Telefons zu erhalten, einer Kamera, die konfiguriert ist, ein Bild einer Umgebung des Flugrahmens (1201; 2201; 3201) aufzunehmen, einem geomagnetischen Sensor, der konfiguriert ist, einen Azimut des Flugrahmens (1201; 2201; 3201) zu erfassen, und einer Höhenerfassungsvorrichtung aufweist, die konfiguriert ist, eine Flughöhe des Flugrahmens (1201; 2201; 3201) zu erfassen.

9. Luftfahrzeug (1A, 1B, 1C) nach Anspruch 8, wobei
die Höhenerfassungsvorrichtung mindestens einen von einem barometrischen Drucksensor, einem Lasersensor, einem Ultraschallsensor, einem Infrarotsensor, einem Millimeterwellenradar und einem Sub-Millimeterwellenradar aufweist.

10. Luftfahrzeug (1A, 1B, 1C) nach Anspruch 1, wobei
die Abwärtsbedingungserfassungseinrichtung (1424; 2424) mindestens eine/einen von einer Kamera, einem Bildsensor, einem Infrarotsensor, einem Lasersensor, einem Ultraschallsensor, einem Millimeterwellenradar und einem Sub-Millimeterwellenradar aufweist.

11. Luftfahrzeug (1A, 1B, 1C) nach Anspruch 1, ferner mit einer Benachrichtigungseinheit (1426; 2427), die konfiguriert ist, einen Alarm auszugeben, wenn die Bestimmungseinheit bestimmt, dass jemand bei der Sollposition des Fallens ist.

12. Luftfahrzeug (1A, 1B, 1C) nach einem der Ansprüche 1, 10 und 11, ferner mit einer Fernsteuerung (1300), die konfiguriert ist, den Vortriebsmechanismus (1202; 2202; 3202) fernzusteuern, wobei
die Fernsteuerung (1300) eine Anzeige (1301) aufweist, die konfiguriert ist, Informationen anzuzeigen, die durch die Abwärtsbedingungserfassungseinrichtung (1424; 2424) erfasst werden.

13. Luftfahrzeug (1A, 1B, 1C) nach einem der Ansprüche 1 bis 11, wobei
der Flugrahmen (1201; 2201; 3201) mit einer Flugsteuerung versehen ist, die konfiguriert ist, den Vortriebsmechanismus (1202; 2202; 3202) zu steuern, und
die Steuerungseinheit (1420; 2420) in der Flugsteuerung eingebunden ist.

14. Luftfahrzeug (1A, 1B, 1C) nach einem der Ansprüche 1 bis 13,
das ein unbemanntes Luftfahrzeug (1A, 1B, 1C) ist.

15. Verfahren zum Steuern eines Luftfahrzeugs (1A, 1B, 1C), wobei das Luftfahrzeug (1A, 1B, 1C) einen Flugrahmen (1201; 2201; 3201), einen Vortriebsmechanismus (1202; 2202; 3202), der bei dem Flugrahmen (1201; 2201; 3201) vorgesehen ist, ein Auftrieberzeugungselement (1110; 1186; 2110; 2186; 3110), das auf eine expandierbare Weise bei dem Flugrahmen (1201; 2201; 3201) vorgesehen ist, einen Manipulationsmechanismus, der mit dem Auftrieberzeugungselement (1110; 1186; 2110; 2186; 3110) verbunden ist und konfiguriert ist, das Auftrieberzeugungselement (1110; 1186; 2110; 2186; 3110) mit dem Auftrieberzeugungselement (1110; 1186; 2110; 2186; 3110), das expandiert worden ist, zu manipulieren, eine Expansionsvorrichtung (1115; 1190; 2115; 2190; 3115), die konfiguriert ist, das Auftrieberzeugungselement (1110; 1186; 2110; 2186; 3110) zu expandieren, eine Steuerungseinheit (1420; 2420), die konfiguriert ist, den Manipulationsmechanismus zu steuern, eine Fallmesseinheit (1421; 2421), die konfiguriert ist, ein Fallen des Flugrahmens (1201; 2201; 3201) zu messen und der Expansionsvorrichtung (1115; 1190; 2115; 2190; 3115) und der Steuerungseinheit (1420; 2420) ein Fallmesssignal bereitzustellen, eine Abwärtsbedingungserfassungseinrichtung (1424; 2424), die konfiguriert ist, eine Bedingung unterhalb des Flugrahmens (1201; 2201; 3201) zu erfassen, und eine Bestimmungseinheit aufweist, die konfiguriert ist, auf der Grundlage der Informationen, die durch die Abwärtsbedingungserfassungseinrichtung (1424; 2424) erfasst werden, zu bestimmen, ob jemand bei einer Sollposition des Fallens ist, wobei das Verfahren Folgendes aufweist:
die Expansionsvorrichtung (1115; 1190; 2115; 2190; 3115) expandiert das Auftrieberzeugungselement (1110; 1186; 2110; 2186; 3110) beim Empfangen des Fallmesssignals;
die Steuerungseinheit (1420; 2420) startet beim Empfangen des Fallmesssignals eine Steuerung des Manipulationsmechanismus;
die Steuerungseinheit (1420; 2420) bestimmt die Sollposition des Fallens des Flugrahmens (1201; 2201; 3201) auf der Grundlage von Informationen, die durch die Abwärtsbedingungserfassungseinrichtung (1424; 2424) erfasst werden, und steuert den Manipulationsmechanismus so, dass der Flugrahmen (1201; 2201; 3201) zu der Sollposition des Fallens gelenkt wird; und
die Steuerungseinheit (1420; 2420) ändert die Sollposition des Fallens und steuert den Manipulationsmechanismus so, dass der Flugrahmen (1201; 2201; 3201) zu der geänderten Sollposition des Fallens gelenkt wird, wenn die Bestimmungseinheit bestimmt, dass jemand bei der Sollposition des Fallens ist.

## Revendications

1. Véhicule aérien (1A, 1B, 1C) comprenant :
une cellule (1201 ; 2201 ; 3201) ;
un mécanisme propulseur (1202 ; 2202 ; 3202) prévu dans la cellule (1201 ; 2201 ; 3201) ;
un élément générateur de portance (1110 ; 1186 ; 2110 ; 2186 ; 3110) prévu dans la cellule (1201 ; 2201 ; 3201) de manière agrandissable ;
un appareil d'agrandissement (1115 ; 1190 ; 2115 ; 2190 ; 3115) configuré pour agrandir l'élément générateur de portance (1110 ; 1186 ; 2110 ; 2186 ; 3110) ;
une unité de commande (1420 ; 2420) ; et
une unité de détection de descente (1421 ; 2421) configurée pour détecter une descente de la cellule (1201 ; 2201 ; 3201) et pour fournir un signal de détection de descente à l'appareil d'agrandissement (1115 ; 1190 ; 2115 ; 2190 ; 3115) et l'unité de commande (1420 ; 2420),
l'appareil d'agrandissement (1115 ; 1190 ; 2115; 2190 ; 3115) étant configuré pour agrandir l'élément générateur de portance (1110 ; 1186 ; 2110 ; 2186 ; 3110) à la suite de la réception du signal de détection de descente,
un mécanisme de manipulation relié à l'élément générateur de portance (1110 ; 1186 ; 2110 ; 2186 ; 3110) et configuré pour manipuler l'élément générateur de portance (1110 ; 1186 ; 2110 ; 2186 ; 3110) avec l'élément générateur de portance (1110 ; 1186 ; 2110 ; 2186 ; 3110) ayant été agrandi ;
un détecteur de condition de dessous (1424 ; 2424) configuré pour détecter une condition en dessous de la cellule (1201 ; 2201 ; 3201) ; et
une unité de détermination configurée pour déterminer s'il y a quelqu'un à une position cible de descente, sur la base des informations détectées par le détecteur de condition de dessous (1424 ; 2424), dans lequel
l'unité de commande (1420 ; 2420) est configurée pour commander le mécanisme de manipulation et pour commencer la commande du mécanisme de manipulation à la suite de la réception du signal de détection de descente ;
l'unité de commande (1420 ; 2420) est configurée pour déterminer la position cible de descente de la cellule (1201 ; 2201 ; 3201), sur la base d'informations détectées par le détecteur de condition de dessous (1424 ; 2424), et pour commander le mécanisme de manipulation de telle sorte que la cellule (1201 ; 2201 ; 3201) soit orientée pour la position cible de descente ; et
l'unité de commande (1420 ; 2420) est configurée pour changer la position cible de descente et pour commander le mécanisme de manipulation de telle sorte que la cellule (1201 ; 2201 ; 3201) soit orientée pour la position cible de descente changée, lorsque l'unité de détermination détermine qu'il y a quelqu'un à la position cible de descente.

2. Véhicule aérien (1A, 1B, 1C) selon la revendication 1, dans lequel
l'appareil d'agrandissement (1115 ; 1190 ; 2115; 2190 ; 3115) agrandit l'élément générateur de portance (1110 ; 1186 ; 2110 ; 2186 ; 3110) avec une puissance de propulsion, sur la base d'une pression de gaz produite par ignition de poudre.

3. Véhicule aérien (1A, 1B, 1C) selon la revendication 1 ou 2, dans lequel
l'appareil d'agrandissement (1115 ; 1190 ; 2115 ; 2190 ; 3115) est fixé à une surface extérieure de la cellule (1201 ; 2201 ; 3201).

4. Véhicule aérien (1A, 1B, 1C) selon l'une quelconque des revendications 1 à 3, dans lequel
l'unité de détection de descente (1421 ; 2421) inclut au moins un d'un capteur d'accélération, d'un gyro-capteur, d'un capteur de pression barométrique, d'un capteur laser, d'un capteur ultrasonique, et d'un appareil de détection de vibration anormale configuré pour détecter une vibration anormale du mécanisme propulseur (1202 ; 2202 ; 3202).

5. Véhicule aérien (1A, 1B, 1C) selon l'une quelconque des revendications 1 à 3, comprenant en outre :
une unité d'alimentation en énergie électrique configurée pour effectuer une alimentation en énergie électrique pour faire fonctionner le mécanisme propulseur (1202 ; 2202 ; 3202) ; et
une source d'alimentation en énergie électrique (1422 ; 2422) configurée pour effectuer une alimentation en énergie électrique à l'appareil d'agrandissement (1115 ; 1190 ; 2115 ; 2190 ; 3115), l'unité de commande (1420 ; 2420), et l'unité de détection de descente (1421 ; 2421), séparément de l'unité d'alimentation en énergie électrique.

6. Véhicule aérien (1A, 1B, 1C) selon la revendication 5, dans lequel
l'unité de détection de descente (1421 ; 2421) inclut au moins un d'un capteur d'accélération, d'un gyro-capteur, d'un capteur de pression barométrique, d'un capteur laser, d'un capteur ultrasonique, d'un appareil de détection de vibration anormale configuré pour détecter une vibration anormale du mécanisme propulseur (1202 ; 2202 ; 3202), et d'un appareil de détection d'anomalie de tension configuré pour détecter une anomalie de tension dans l'unité d'alimentation en énergie électrique.

7. Véhicule aérien (1A, 1B, 1C) selon l'une quelconque des revendications 1 à 6, comprenant en outre un détecteur de position (1423 ; 2423) configuré pour détecter des informations de position de la cellule (1201 ; 2201 ; 3201), dans lequel
l'unité de commande (1420 ; 2420) commande le mécanisme de manipulation, sur la base des informations de position détectées par le détecteur de position (1423 ; 2423).

8. Véhicule aérien (1A, 1B, 1C) selon la revendication 7, dans lequel
le détecteur de position (1423 ; 2423) inclut au moins un d'un appareil GNSS configuré pour obtenir les informations de position en utilisant un satellite artificiel, d'un appareil configuré pour obtenir les informations de position en utilisant une station de base d'un téléphone portatif, d'une caméra configurée pour capter une image d'environs de la cellule (1201 ; 2201 ; 3201), d'un capteur géomagnétique configuré pour détecter un azimut de la cellule (1201 ; 2201 ; 3201), et d'un appareil de détection d'altitude configuré pour détecter une altitude de la cellule (1201 ; 2201 ; 3201).

9. Véhicule aérien (1A, 1B, 1C) selon la revendication 8, dans lequel
l'appareil de détection d'altitude inclut au moins un d'un capteur de pression barométrique, d'un capteur laser, d'un capteur ultrasonique, d'un capteur infrarouge, d'un radar à ondes millimétriques, et d'un radar à ondes sous-millimétriques.

10. Véhicule aérien (1A, 1B, 1C) selon la revendication 1, dans lequel
le détecteur de condition de dessous (1424 ; 2424) inclut au moins un d'une caméra, d'un capteur image, d'un capteur infrarouge, d'un capteur laser, d'un capteur ultrasonique, d'un radar à ondes millimétriques, et d'un radar à ondes sous-millimétriques.

11. Véhicule aérien (1A, 1B, 1C) selon la revendication 1, comprenant en outre une unité de notification (1426 ; 2427) configurée pour émettre une alarme lorsque l'unité de détermination détermine qu'il y a quelqu'un à la position cible de descente.

12. Véhicule aérien (1A, 1B, 1C) selon l'une quelconque des revendications 1, 10 et 11, comprenant en outre un dispositif de commande à distance (1300) configuré pour commander à distance le mécanisme propulseur (1202 ; 2202 ; 3202), dans lequel
le dispositif de commande à distance (1300) inclut un dispositif d'affichage (1301) configuré pour présenter des informations détectées par le détecteur de condition de dessous (1424 ; 2424).

13. Véhicule aérien (1A, 1B, 1C) selon l'une quelconque des revendications 1 à 11, dans lequel
la cellule (1201 ; 2201 ; 3201) est pourvue d'un dispositif de commande de vol configuré pour commander le mécanisme propulseur (1202 ; 2202 ; 3202), et
l'unité de commande (1420 ; 2420) est incorporée dans le dispositif de commande de vol.

14. Véhicule aérien (1A, 1B, 1C) selon l'une quelconque des revendications 1 à 13, étant un véhicule aérien sans pilote (1A, 1B, 1C).

15. Procédé de commande d'un véhicule aérien (1A, 1B, 1C), le véhicule aérien (1A, 1B, 1C) incluant une cellule (1201 ; 2201 ; 3201), un mécanisme propulseur (1202 ; 2202 ; 3202) prévu dans la cellule (1201 ; 2201 ; 3201), un élément générateur de portance (1110 ; 1186 ; 2110 ; 2186 ; 3110) prévu dans la cellule (1201 ; 2201 ; 3201) de manière agrandissable, un mécanisme de manipulation relié à l'élément générateur de portance (1110 ; 1186 ; 2110 ; 2186 ; 3110) et configuré pour manipuler l'élément générateur de portance (1110 ; 1186 ; 2110 ; 2186 ; 3110) avec l'élément générateur de portance (1110 ; 1186 ; 2110 ; 2186 ; 3110) ayant été agrandi, un appareil d'agrandissement (1115 ; 1190 ; 2115 ; 2190 ; 3115) configuré pour agrandir l'élément générateur de portance (1110 ; 1186 ; 2110 ; 2186 ; 3110), une unité de commande (1420 ; 2420) configurée pour commander le mécanisme de manipulation, une unité de détection de descente (1421 ; 2421) configurée pour détecter une descente de la cellule (1201 ; 2201 ; 3201) et pour fournir un signal de détection de descente à l'appareil d'agrandissement (1115 ; 1190 ; 2115 ; 2190 ; 3115) et l'unité de commande (1420 ; 2420), un détecteur de condition de dessous (1424 ; 2424) configurée pour détecter une condition en dessous de la cellule (1201 ; 2201 ; 3201), et une unité de détermination configurée pour déterminer s'il y a quelqu'un à une position cible de descente, sur la base des informations détectées par le détecteur de condition de dessous (1424 ; 2424), le procédé comprenant :
l'appareil d'agrandissement (1115 ; 1190 ; 2115 ; 2190 ; 3115) agrandissant l'élément générateur de portance (1110 ; 1186 ; 2110 ; 2186 ; 3110) à la suite de la réception du signal de détection de descente ;
l'unité de commande (1420 ; 2420) commençant la commande du mécanisme de manipulation à la suite de la réception du signal de détection de descente ;
l'unité de commande (1420 ; 2420) déterminant la position cible de descente de la cellule (1201 ; 2201 ; 3201), sur la base d'informations détectées par le détecteur de condition de dessous (1424 ; 2424), et commandant le mécanisme de manipulation de telle sorte que la cellule (1201 ; 2201 ; 3201) soit orientée pour la position cible de descente ; et
l'unité de commande (1420 ; 2420) changeant la position cible de descente et commandant le mécanisme de manipulation de telle sorte que la cellule (1201 ; 2201 ; 3201) soit orientée pour la position cible de descente changée, lorsque l'unité de détermination détermine qu'il y a quelqu'un à la position cible de descente.
